# EUROPEAN PATENT SPECIFICATION

(11) **EP 1 486 876 B1**
(45) Date of publication and mention of the grant of the patent: **13.08.2008**
(21) Application number: 03743980.9
(22) Date of filing: 24.01.2003
(51) Int. Cl.: G06F 11/14, G06F 11/26

(54) **MEMORY REWRITING APPARATUS**
SPEICHERUMSCHREIBEVORRICHTUNG
DISPOSITIF DE REECRITURE DE MEMOIRE

(30) Priority: 14.03.2002 JP 2002070980
(43) Date of publication of application: 15.12.2004
(73) Proprietor: Sanyo Electric Co., Ltd., Osaka 570-8677 (JP)
(72) Inventor: NOHNO, Masaki, Daito-shi, Osaka 574-0043 (JP); MATSUMOTO, Fumiaki, Higashiosaka-shi, Osaka 577-0002 (JP); NAGASE, Kousuke, Ichinomiya-shi, Aichi 491-0062 (JP)
(74) Representative: Cross, James Peter Archibald
(86) International application number: PCT/JP2003/000640
(87) International publication number: WO 2003/077134

(56) References cited:
- EP-A- 1 028 371
- JP-A- 7 105 691
- JP-A- 7 193 860
- JP-A- 2002 207 599
- US-A- 5 802 551
- US-A- 5 845 142

## Description

### Technical Field

The present invention relates to a memory rewriting apparatus which controls rewriting of data stored in a memory, such as rewritable nonvolatile memory, of a portable terminal, such as a portable telephone and a PDA.

### Background Art

In a portable terminal, a memory (e.g. a flash memory) is divided into a plurality of storage areas. In the storage areas, a boot program, which is started up when the portable terminal is in the initial state, various systemprograms, fonts, colored illustrations, other various data and the like are stored respectively. These programs and data are read into a main memory and used according to instructions from a CPU.

A flash memory is a medium which electrically stores data on semiconductor devices thereof. The manner how the flash memory deals with data is the same as a RAM for personal computers. However, the flash memory can keep data without power, whereas the RAM loses its content when the power is turned off. Also, the flash memory can be downsized. Furthermore, its content can be erased collectively, and it realizes high-speed data writing. Meanwhile, a rechargeable battery, which is designed to be charged and discharged repeatedly, is generally used for a portable terminal as a power source. In the case where the rechargeable battery is used, the basic functions of the portable terminal, such as communication and text data input, become impossible when the battery runs out of the power. However, if the flash memory is used as a memory for storing data, the data in the memory is not to be lost even in the above case. Also, in the case of rewriting only one bit of data, a frequency of data rewriting can be decreased by us ing the flashmemory, because the flash memory can be accessed randomly just as the RAM, whereas all the bits have to be erased for rewriting only one bit when an EEPROM is used. As a result, necessary power for data rewriting can be saved. The flash memory is effective for reducing power consumption especially for the case where the rechargeable battery is used, because the discharge time of the rechargeable battery is limited.

Sometimes there is a need to rewrite only specific data in a memory. In this case, if the flash memory is used, it is possible to individually rewrite the data in each one of memory blocks, which have been allocated as storage areas. Therefore, the flash memory is suitable for rewriting only specific data that requires rewriting. Recently, malfunction of a portable terminal has often become a problem. This malfunction results from bugs in system programs for operating the portable terminal (e.g. a portable telephone) and the inconsistency of data caused by the difference among data versions, and so on. Especially when considering this fact, there is a need for rewriting only such system programs or data which cause the malfunction.

Based on the above background, the flash memory is often used as a memory in a portable terminal for storing various data.

Meanwhile, distributors of portable terminals sometimes offer upgrade service to users who hold portable terminals which do not function properly. Through this service, system programs or data with problems are upgraded to normal ones.

For rewriting programs or data in the flash memory, the portable terminal is to be connected to a general-purpose computer with a serial interface, and upgrade information (programs and data) is to be transmitted to the portable terminal to upgrade and rewrite the data stored in the flash memory. For performing this rewriting, the battery in the portable terminal is used as the power source. However, the following problems may occur during the rewriting.

Usually, the portable terminal includes means for detecting the remaining battery charge. The amount of the detected battery charge is notified to the user by displaying the amount with a battery level indicator and so on. Before performing the upgrade, the user or the provider of the service checks the amount of the remaining battery charge, and if it seems to be not sufficient for the upgrade, the upgrade would be performed after recharging the battery.

However, if recharging is needed to secure sufficient battery charge before the upgrade, the user can not receive the service immediately. At worst, the upgrade does not finish until a few hours after the user goes to the store, or until the next day. This disappoints expectations by the user who wishes to use the portable terminal with upgraded performance realized by the newest version of data or programs as soon as possible. Of course, this is not a preferable situation for manufacturer of the portable terminal as well.

Meanwhile, even if the amount of the remaining battery charge seems to be sufficient, it is often hard to figure out how many memory areas have to be upgraded, because the versions of the data and the programs stored in the flash memory differ with each model of the portable terminal. Also, the amount of the battery power consumption depends on the amount of the data which is to be upgraded, and on rewriting performance, such as the rewritable amount of the data per unit electric power. In some portable terminals, the means for detecting the remaining battery charge can just roughly show the remaining charge level, and the user can not know the remaining amount of the battery charge exactly. This causes a problem that data rewriting stops in the middle because of a shortage of battery charge. When this happens, the portable terminal can come to complete standstill. Also, if a boot program is rewritten halfway through, the portable terminal may not work properly because of an inconsistency among data and programs, even after recharging the battery.

As described above, there are cases where the data rewriting stops in the middle because of a shortage of battery charge, even if there seemed to be sufficient remaining battery charge before the rewriting starts.

US 5,802,551 discloses a method and apparatus for controlling the writing and erasing of information in a memory device, wherein data transferred from a host computer to a memory device is written into sectors whose addresses in a memory area are decoded by decode tables. Old data to be updated is erased or marked with erase flags. In order to free up memory space, data which is still required is evacuated to a primary memory media and the remaining unnecessary data indicated by erase flags is erased.

EP 1,028,371 discloses a personal computer using flash memory as BIOS ROM.

US 5,845,142 discloses a portable terminal for data communication with a host computer, wherein individual battery capacity available to the portable terminal is compared to the necessary power for performing a communication with a host computer. If the former is in excess of the later, the communication operation is allowed.

### Disclosure of the Invention

In view of the above problems, the present invention aims to provide a memory rewriting apparatus which can rewrite data stored in a memory of a portable terminal without stopping in the middle.

According to a first aspect of the present invention, there is provided a memory rewriting apparatus according to claim 1.

In an embodiment, the memory rewriting apparatus does not rewrite data stored in a memory regardless of an amount of charge of a battery included in a portable terminal, but can detect current amount of remaining battery charge and rewrite the data only when the amount is sufficient for the rewriting. This realizes a rewriting process in which an amount of the remaining battery charge is taken in consideration. As a result, the rewriting of data in a memory included in the portable terminal can be completed without stopping in the middle. This prevents the inconsistency among data, and ensures proper operations of the portable terminal after finishing the rewriting.

In an embodiment, the memory rewriting apparatus starts the rewriting only when the amount of remaining charge is sufficient for completing the rewriting.

According to this embodiment, the memory rewriting apparatus does not equally rewrite all pieces of data in the memory including pieces of data which do not require the rewriting, but can detect the current amount of remaining battery charge and selectively rewrite only pieces of data which can be rewritten with the amount of remaining battery charge. This speeds up the rewriting process.

In a further embodiment, the memory rewriting apparatus further comprises: a notification unit operable to notify an operator when the amount of remaining charge is not sufficient for completing the rewriting.

According to the further embodiment, the memory rewriting apparatus can inform the operator in the case where the current amount of the battery charge is not sufficient for rewriting the data in the memory. This enables the operator to deal with the case where the remaining battery charge is not sufficient, by changing or recharging the battery.

In a yet further embodiment, the memory in the portable terminal is divided into a plurality of memory areas , the judging unit may check versions of pieces of data respectively stored in the memory areas, may judge whether a memory area storing a piece of data which requires the rewriting can be rewritten by comparing the amount of remaining charge to an estimated battery consumption for rewriting the piece of data, and may perform the rewriting of the piece of data in a case where the memory area can be rewritten.

According to the yet further embodiment, the battery consumption for rewriting can be minimized. As a result, the rewriting of data in the memory included in the portable terminal can be completed without stopping in the middle even in the case where the current amount of the remaining battery charge is not sufficient. Also, the rewriting is not to be performed on pieces of data which do not necessarily require the rewriting. This speeds up the rewriting process.

According to a still further embodiment, the memory in the portable terminal is divided into a plurality of memory areas, and when there are two or more memory areas that require the rewriting, the judging unit may check versions of pieces of data stored in the memory areas, may perform the judgment by comparing the remaining charge to a total amount of battery consumptions for rewriting all memory areas which respectively store pieces of data requiring the rewriting, and may perform the rewriting only in a case where all the memory areas which store the pieces of data requiring the rewriting can be rewritten.

According to the still further embodiment, all pieces of the data which require the rewriting can be rewritten. This prevents the inconsistency among data caused by the deference among data versions.

The present invention is especially effective in a case where at least one of the pieces of data stored in the memory is a boot program.

This is because that if the rewriting is not completed in the case where a piece of data stored in the memory is a boot program, an update mode can not be started and the following rewriting process can not be performed.

According to a second aspect of the present invention, there is provided a computer program product according to claim 6.

According to a third aspect of the present invention, there is provided a memory rewriting method according to claim 7

Further aspects of the invention are set out in the remaining dependent claims.

### Brief Description Of The Drawings

FIG. 1. shows a memory rewriting apparatus according to the embodiment which is connected to a portable telephone by a serial interface;
FIG.2 is a functional block diagram which shows the construction of a memory rewriting apparatus 1 according to the embodiment;
FIG. 3 shows the structure of update data information;
FIG.4 shows the structure of battery consumption information;
FIG. 5 is a flowchart representing a memory rewriting process performed by the memory rewriting apparatus 1;
FIG. 6 shows an example of a warning message; and
FIG. 7 is a flowchart representing operations by a control unit 201 for updating data.

### Best Mode for Carrying Out the Invention

The following specifically describes a memory rewriting apparatus which is an embodiment of the present invention. Note that although a memory rewriting apparatus for rewriting data in a portable telephone is described in the embodiment, the present invention can be applied not only to portable telephones but also to other portable terminals.

### Overall Construction

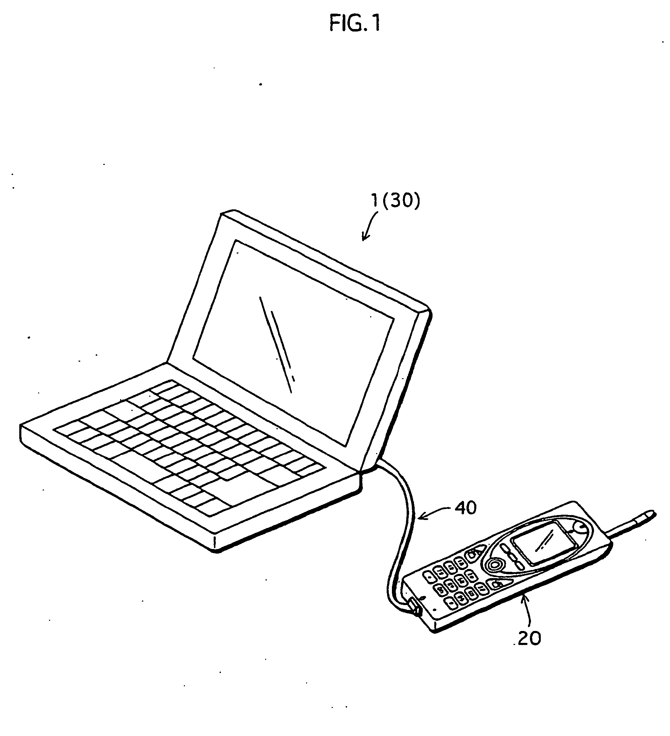

As FIG. 1 shows, in the embodiment, a portable telephone 20 and a general-purpose computer (a personal computer) 30 as a memory rewriting apparatus 1 are connected to each other with a serial interface 40 (an RS-232C interface) for transmitting and receiving data. A memory included in the portable telephone 20 is to be rewritten.

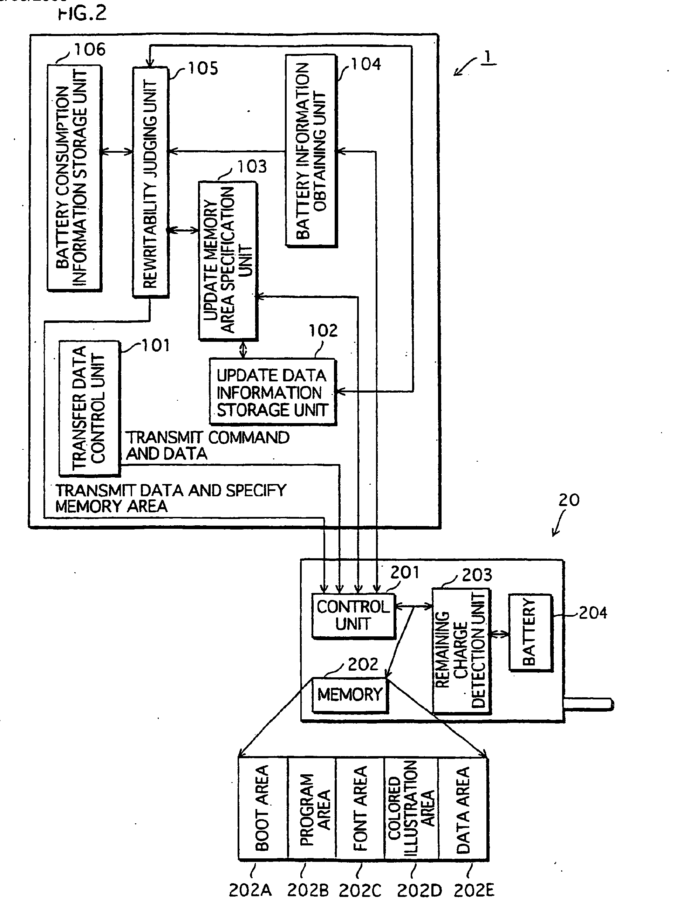

FIG.2 is functional block diagram which shows the construction of the memory rewriting apparatus 1 according to the embodiment.

As FIG.2 shows, the memory rewriting apparatus 1 includes a transfer data control unit 101, an update data information storage unit 102, an update memory area specification unit 103, battery information obtaining unit 104, a rewritability judging unit 105, and a battery consumption information storage unit 106. Each unit may be realized by either software which operates on a CPU or hardware.

The portable telephone 20 includes a control unit 201, a flash memory 202, a remaining charge detection unit 203, and a battery 204.

### Detailed Construction

### Portable telephone 20

The control unit 201 included in the portable telephone 20 controls a rewriting process of data within the flash memory 202 according to transmission content from the memory rewriting apparatus 1. The control unit 201 includes a CPU and a memory, and also includes programs for controlling the rewriting. When receiving an update command from the memory rewriting apparatus 1, the control unit 201 performs the rewriting according to the program.

In the flash memory 202, a plurality of memory areas are formed by allocating physical addresses, and each memory area stores data individually. FIG.2 shows an example in which the flash memory 202 is divided into five memory areas, which are 202A, 202B, 202C, 202D and 202E. A boot program, which is started up when the portable terminal is in the initial state, various system programs, fonts, colored illustrations, other various data and the like are stored in memory areas individually. These storage areas are called a boot area, a program area, a font area, a colored illustration area and a data area respectively. Note that each memory area consists of one or more memory blocks, where the number of the memory blocks depends on the amount of the data which is to be stored.

The remaining charge detection unit 203 detects the amount of currently remaining battery charge of the battery 204. Generally, a portable telephone includes a unit which has the same function as the remaining charge detection unit 203, and the unit can be used alternatively.

The battery 204 is not limited to any kind of battery. For instance, a lithium-ion secondary battery may be used.

### Memory rewriting apparatus 1

The transfer data control unit 101 has a function of transmitting the update command which notifies the portable telephone 20 that an update of various data stored in the memory of portable telephone 20 is to be executed, and a function of transmitting various data for the update.

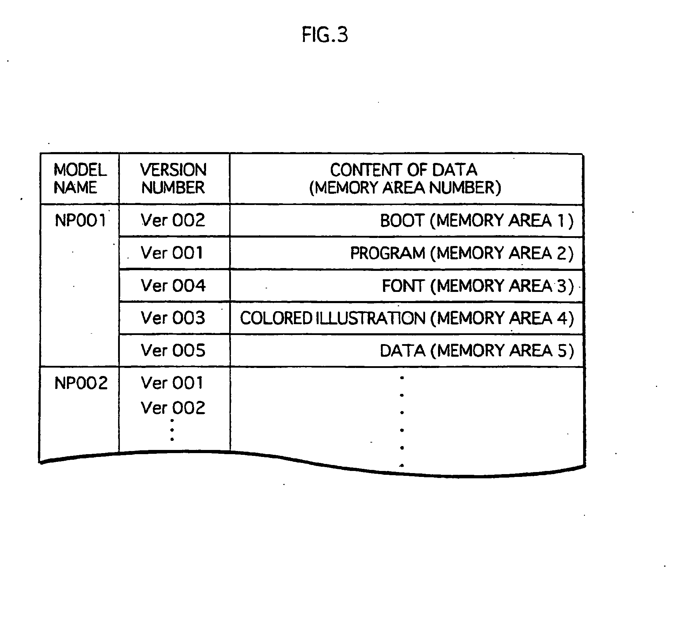

The update data information storage unit 102 stores update data information which indicates the newest version number of the data stored in each memory area of the flash memory 202, corresponding to the model of the portable telephone 20. FIG. 3 shows the construction of the update data information.

As FIG. 3 shows, the update data information indicates the newest version numbers of the data stored in the memory areas corresponding to the model of the portable telephone 20. For instance, when the model is NP001, the corresponding version of the program is Ver. 1, and the corresponding version of the font is Ver.4.

The update memory area specification unit 103 specifies data in which memory area among 202A, 202B, 202C, 202D, 202E included in the flash memory 202, is to be rewritten and updated. This specification is performed with reference to the above-described update data information. The update memory area specification unit 103 refers to the newest version of each data, and specifies an area in which the version of data is not the newest as an area to be rewritten.

The battery information obtaining unit 104 obtains the detected current amount of remaining battery charge (mAh) in the portable telephone 20.

The rewritability judging unit 105 judges whether data stored in the above-described specified area can be rewritten, by comparing the amount of remaining battery charge obtained by the battery information obtaining unit 104 to the amount of the battery power consumption for rewriting each data. The rewritability judging unit 105 performs this comparison by reading the battery consumption information stored in the battery consumption information storage unit 106.

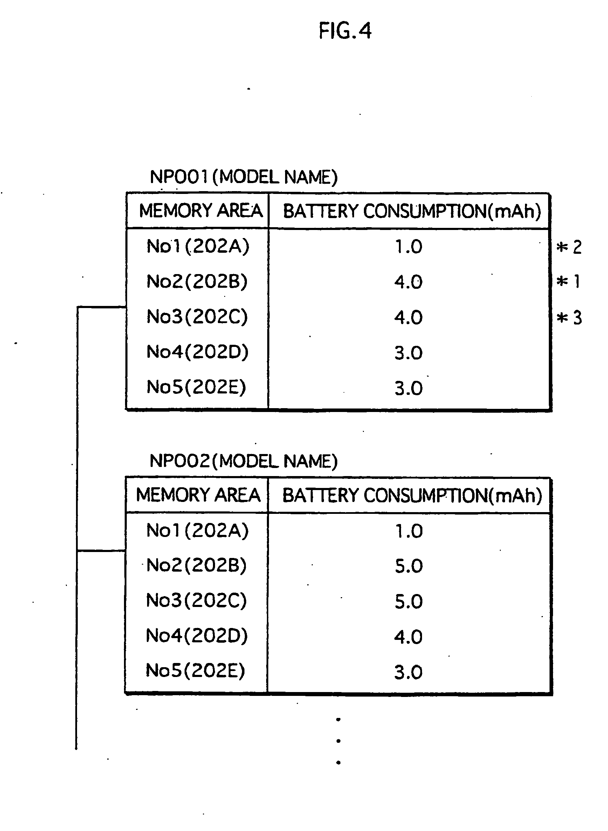

FIG. 4 shows the structure of the battery consumption information. A table is provided for each model, and each table includes names of memory areas and their corresponding battery consumptions (mAh). FIG. 4 is an example of such a table. In FIG. 4, it is indicated that up to 5.0 mAh of battery charge is to be consumed for each one of the memory areas 202A to 202E. Here, the battery consumption for data writing depends on the size of the memory area into which data is to be written, and performance of the model. This is because the time that the data writing takes depends on the above factors. If the data writing takes longer, the battery consumption becomes higher. Each value of the battery consumption in FIG. 4 is determined on the basis of the fact.

Note that the data transmission and data reception between the portable telephone 20 and the memory rewriting apparatus 1 are performed via the serial interface. Therefore, the data is transmitted and received as serial data via a serial communication control unit, which is not shown in figures.

### <Operations>

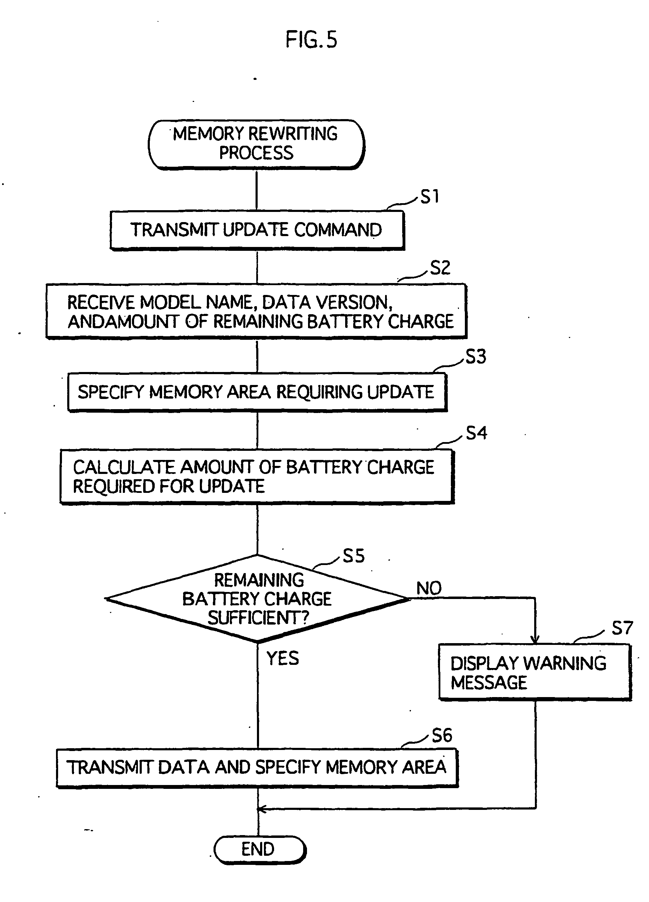

The following is the operation of the memory rewriting apparatus 1. The memory rewriting apparatus 1 performs the memory rewriting process as follows. FIG.5 is a flowchart which represents the memory rewriting procedure performed by the memory rewriting apparatus.

In step S1, the transfer data control unit 101 transmits an update command to the portable telephone 20. Then, the update memory area specification unit 103 receives the model name and the newest version number of the data stored in each area. These are transmitted by the portable telephone 20 in response to the update command. Also, the battery information obtaining unit 104 receives the amount of the remaining battery charge (step S2).

Based on the model name and the newest version number of the data stored in each area, which are received in step S2, the update memory area specification unit 103 refers to the above-described update data information, and specifies a memory area which requires the updated (step S3).

Next, the rewritability judging unit 105 calculates the amount of battery charge required for updating the data in the specified memory area (step S4). This calculation is performed with use of the values read from the battery consumption information stored in the battery consumption information storage unit 106.

The rewritability judging unit 105 compares the value of the battery consumption calculated in step S4 to the current amount of the remaining battery charge obtained in step S2. In the case the where the remaining battery charge is sufficient ("YES" in step S5), the update data information for the memory area specified in step S3 is read from the update data information storage unit 102, and transmitted to the portable telephone 20. Also, the memory area which should be updated is specified (step S6). The memory rewriting is performed in response to the data transmission and the memory area specification, according to instructions from the control unit 201.

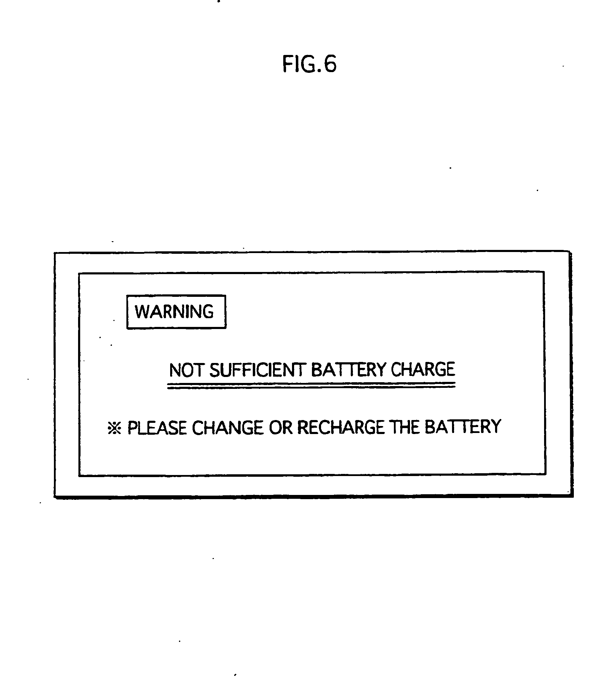

In the case where the remaining battery charge is not sufficient ("NO" in step S5), it is decided that the data in the memory area specified in step S3 is not to be rewritten, and as FIG. 6 shows, the rewritability judging unit 105 displays a warning message for instance (step S7). By this operation, the rewritability judging unit 105 informs the user that the rewriting can not be performed with the amount of the current battery charge.

For instance, in the case where the memory area 202B is specified in step S3 as the area which needs an update, the amount of the battery consumption for updating the area is 4.0 mAh (*1 in FIG. 4). In step S5, the rewritability judging unit 105 compares this value of the battery consumption to the current amount of the remaining battery charge obtained in step S2 (3.0 mAh, for instance) . When the remaining battery charge is not less than the battery consumption, the memory rewriting is to be performed in step S6. On the other hand, when the remaining battery charge is less than the battery consumption, the memory rewriting is not to be performed, and the warning message is to be displayed in the step S7. In this case, the amount of the remaining battery charge is not sufficient for the rewriting. Therefore, the rewriting is not to be performed.

In the case where the memory area 202A and 202C are specified in step S3 as the areas which need an update, the amount of the battery consumption for updating the areas are 1.0 mAh and 4.0 mAh respectively (*2 and *3 in FIG.4). In step S5, the rewritability judging unit 105 compares the battery consumption, which is the total of those values (1.0 + 4.0 = 5.0 mAh), to the current amount of the remaining battery charge obtained in step S2 (3.0 mAh, for instance). When the remaining battery charge is not less than the battery consumption, the memory rewriting is to be performed in step S6. On the other hand, when the remaining battery charge is less than the battery consumption, the memory rewriting is not to be performed, and the warning message is to be displayed in step S7. In this case, the amount of the remaining battery charge is not sufficient for the rewriting. Therefore, the rewriting is not to be performed.

In response to the operation of the memory rewriting apparatus 1 described above, the control unit 201 included in the portable phone 20 operates as follows.

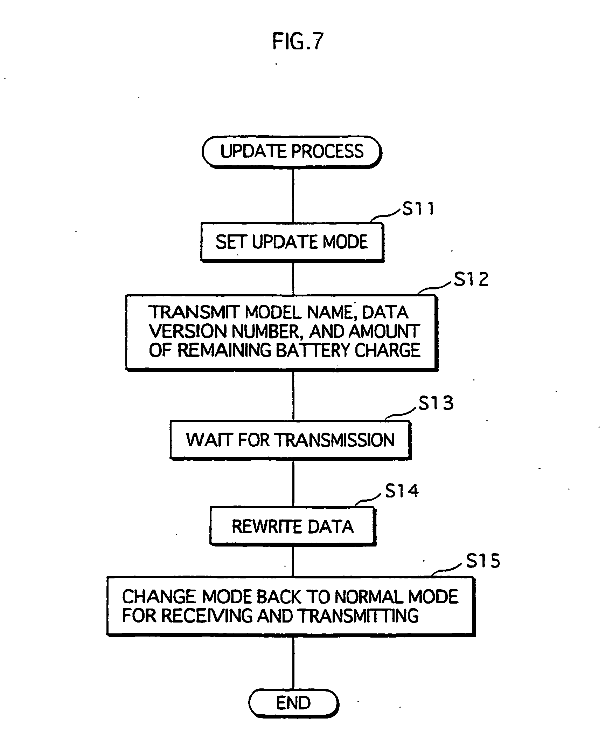

FIG.7 is a flowchart representing the operation of the control unit 201 during the data update.

In step S11, when receiving the update command from the transfer data control unit 101, the control unit 201 suspends normal functions for receiving and transmitting, and reads programs for rewriting from the boot area of the memory area in order to set an update mode.

When the update mode is set, the control unit 201 transmits the model name of the portable telephone 20, the version number of the data in each memory area, and the current amount of the remaining battery charge (step S12). Note that the amount of the remaining battery charge is detected by the remaining charge detection unit 203 at regular intervals, and the detected newest value is to be transmitted.

After transmitting the model name, the version number of the data in each memory area, and the current amount of the remaining battery charge, the control unit 201 waits for a new data for the update and the specification of the memory area which is to be updated, which are transmitted from the memory rewriting apparatus 1 (step S13). When receiving the new data and the specification, the control unit 201 starts the rewriting of data in the specified memory area (step S14). When the rewriting process finishes, the control unit 201 changes the mode back to the normal mode for receiving and transmitting (step S15), and then finishes the update process.

The following is the description of the operations for rewriting data stored in a flash memory by the memory rewriting apparatus 1 in the case where the memory rewriting apparatus 1 is for a distributor's use.

In this case, the memory rewriting apparatus 1 is realized by'programs which run on OS of a general-purpose computer. The memory rewriting apparatus 1 obtains the model name of the customer's portable telephone 20, the version number of the data in each memory area, and the current amount of the remaining battery charge. Then, the memory rewriting apparatus refers to the previously-stored newest version number of data corresponding to the data stored in each memory area in the customer's portable phone 20, and specifies the data (memory area) which should be rewritten.

Also, the memory rewriting apparatus 1 calculates the amount of the battery consumption for rewriting each data to the new data.

Then, the memory rewriting apparatus 1 compares the current amount of the remaining battery charge to the calculated total value of the battery consumption, and rewrites the data in all the specified areas to the newest version of the data only when sufficient battery charge for this operation is remaining. When the remaining battery charge is not sufficient, the memory rewriting apparatus 1 displays the warning message for recommending the operator to recharge the battery, change the battery, and so on.

### <Supplementary explanations>

(1) In the description above, the memory area which is to be rewritten is basically specified when the version of the data in the memory area is not the newest one. However, the data which is closely connected to the other data may be specified as data which is to be rewritten at the same time, even if the version of the data itself is the newest one. This prevents the inconsistency between data which can occur when only particular data is rewritten.
(2) In the description above, the memory rewriting apparatus 1 compares the current amount of the remaining battery charge to the total value of the battery consumption, and rewrites the data in all the specified areas to the newest version of the data. However, the present invention is not limited to this. The memory rewriting apparatus 1 may compare the current amount of the remaining battery charge to each amount of battery consumption for rewriting data in each memory area. The memory rewriting apparatus 1 may rewrite only areas which can be rewritten with the remaining battery. As to areas which cannot be rewritten with the remaining battery, the memory apparatus 1 displaying a warning message which says that the memory areas cannot be rewritten, and recommend the operator to recharge the battery, change the battery, and so on.
(3) The judgment in step S5, by which the rewritability judging unit 105 compares the value of the battery consumption calculated in step S4 to the current amount of the remaining battery charge obtained in step S2, may be performed in such a manner that the rewritability judging unit 105 judges whether the current amount of the remaining battery charge is larger than the value of the battery consumption by a predetermined value (e.g. 1mAh).
(4) In the above-described embodiment, the notification to the operator is performed only when the rewriting is not possible. However, the present invention is not limited to this. The notification may also be performed when the rewriting finishes.
(5) The control programs for controlling the rewriting of memory, which are stored in the control unit 201, may be stored in a flash memory.
(6) In the above-described embodiment, a flash memory is taken as an example of a memory for storing data. However, a rewritable nonvolatile memory other than the flash memory may be used.

### Industrial Applicability

The present invention is applicable to an apparatus which controls rewriting of various data in a memory of a portable terminal.

## Claims

1. A memory rewriting apparatus (1) operable to rewrite data stored in a plurality of memory areas (202A, 202B, 202C, 202D) of a memory in a portable terminal (20), comprising:
a remaining charge amount obtaining unit (104) operable to obtain an amount of remaining charge in a battery (204) which drives the portable terminal(20);
a holding unit operable to hold update data information indicating, for each memory area, a latest version number of data to be stored in the memory area;
a storage unit operable to store respective estimated battery consumptions by the portable terminal for rewriting pieces of data respectively stored in the plurality of memory areas of the memory in the portable terminal;
a version number obtaining unit operable to obtain, for each memory area, a version number of data stored in the memory area;
an area specifying unit operable to compare, for each memory area, the latest version number indicated by the update data information and the version number obtained by the version number obtaining unit, and to specify one or more memory areas whose obtained version number and latest version number are not the same; and
a judging unit (105) operable to judge whether to rewrite the one or more memory areas specified by the area specifying unit based on an estimated battery consumption for the one or more memory areas stored in the storage unit and the amount of the remaining charge in the battery obtained by the remaining charge amount obtaining unit.

2. A memory rewriting apparatus (1) according to Claim 1, wherein
when the memory area can be rewritten with the remaining charge, the judging unit (105) is operable to determine to rewrite the memory area and to rewrite the piece of data stored in the memory area.

3. The memory rewriting apparatus (1) according to Claim 1 or 2, wherein
when two or more memory areas require rewriting, the judging unit (105) is operable to perform the judgment by comparing the amount of remaining charge to, among the estimated battery consumptions stored in the storage unit (106), a total amount of estimated battery consumptions for rewriting all the memory areas which respectively store pieces of data requiring rewriting, and to perform rewriting only when all the memory areas which store the pieces of data requiring rewriting can be rewritten with the remaining charge.

4. A memory rewriting apparatus (1) according to claim 1 or 2, wherein when two or more memory areas require rewriting, the judging unit (105) is operable to compare the amount of remaining charge to each amount of battery consumption for rewriting data in each memory area, and to rewrite only areas which can be rewritten with the remaining charge.

5. A memory rewriting apparatus (1) according to Claim 2, 3 or 4, wherein
at least one of the pieces of data stored in the memory (202) is a boot program.

6. A computer program executable to perform a rewriting process for rewriting data stored in a plurality of memory areas (202A, 202B, 202C, 202D) of a memory in a portable terminal (20) when executed on a computer, wherein the rewriting process comprises:
a remaining charge amount obtaining step operable to obtain an amount of remaining charge in a battery (204) which drives the portable terminal (20);
a holding step operable to hold update data information indicating, for each memory area, a latest version number of data to be stored in the memory area;
a storage step operable to store in a storage unit respective estimated battery consumptions by the portable terminal for rewriting pieces of data respectively stored in the plurality of memory areas of the memory in the portable terminal;
a version number obtaining step operable to obtain, for each memory area, a version number of data stored in the memory area;
an area specifying step operable to compare, for each memory area, the latest version number indicated by the update data information and the version number obtained by the version number obtaining step, and to specify one or more memory areas whose obtained version number and latest version number are not the same; and
a judging step operable to judge whether to rewrite the one or more memory areas specified by the area specifying step based on an estimated battery consumption for the one or more memory areas stored in the storage unit and the amount of the remaining charge in the battery obtained by the remaining charge amount obtaining step.

7. A memory rewriting method used by a memory rewriting apparatus (1) for rewriting data stored in a plurality of memory areas (202A, 202B, 202C, 202D) of a memory in a portable terminal (20), comprising:
a remaining charge amount obtaining step operable to obtain an amount of remaining charge in a battery (204) which drives the portable terminal (20);
a holding step operable to hold update data information indicating, for each memory area, a latest version number of data to be stored in the memory area;
a storage step operable to store in a storage unit respective estimated battery consumptions by the portable terminal for rewriting pieces of data respectively stored in the plurality of memory areas of the memory in the portable terminal;
a version number obtaining step operable to obtain, for each memory area, a version number of data stored in the memory area;
an area specifying step operable to compare, for each memory area, the latest version number indicated by the update data information and the version number obtained by the version number obtaining step, and to specify one or more memory areas whose obtained version number and latest version number are not the same; and
a judging step operable to judge whether to rewrite the one or more memory areas specified by the area specifying step based on an estimated battery consumption for the one or more memory areas stored in the storage unit and the amount of the remaining charge in the battery obtained by the remaining charge amount obtaining step.

## Patentansprüche

1. Speicherumschreibevorrichtung (1), die zum Überschreiben von Daten zu betreiben ist, welche in einer Anzahl von Speicherbereichen (202A, 202B, 202C, 202D) eines Speichers in einem tragbaren Endgerät (20) gespeichert sind, mit:
einer Restladungsmengenerhalteinheit (104), die zum Erlangen einer Menge der Restladung in einer Batterie (204), die das tragbare Endgerät (20) treibt, betreibbar ist,
einer Halteeinheit, die zum Halten von Aktualisierungsdateninformation, die für jeden Speicherbereich eine letzte Versionsnummer von in dem Speicherbereich zu speichernden Daten anzeigt, betreibbar ist,
eine Speichereinheit, die zum Speichern des jeweils geschätzten Batterieverbrauchs durch das tragbare Endgerät zum Überschreiben von Teilen der Daten, die jeweils in der Anzahl von Speicherbereichen des Speichers in dem tragbaren Endgerät gespeichert sind, betreibbar ist,
einer Versionsnummernerhalteinheit, die zum Erlangen einer Versionsnummer der in dem Speicherbereich gespeicherten Daten für jeden Speicherbereich betreibbar ist,
eine Bereichsspezifiziereinheit, die betreibbar ist, um für jeden Speicherbereich die letzte Versionsnummer, die durch die Aktualisierungsdateninformation angezeigt ist, und die Versionsnummer, die durch die Versionsnummemerhalteinheit erlangt worden ist, zu vergleichen, und um einen oder mehrere Speicherbereiche zu spezifizieren, deren erlangte Versionsnummer und letzte Versionsnummer nicht gleich sind, und
eine Entscheidungseinheit (105), die zum Entscheiden betreibbar ist, ob der eine oder mehrere Speicherbereiche, die von der Bereichsspezifiziereinheit spezifiziert worden sind, zu überschreiben sind, auf der Basis des geschätzten Batterieverbrauchs für einen oder mehrere Speicherbereiche, die in der Speichereinheit gespeichert sind, und der Menge der Restladung in der Batterie, die durch die Restladungsmengenerhalteinheit erlangt worden ist.

2. Speicherumschreibevorrichtung (1) nach Anspruch 1, wobei,
wenn der Speicherbereich mit der Restladung überschrieben werden kann, die Entscheidungseinheit (105) so betreibbar ist, dass sie das Überschreiben des Speicherbereichs bestimmt und den Teil der Daten, die in dem Speicherbereich gespeichert sind, überschreibt.

3. Speicherumschreibevorrichtung (1) nach Anspruch 1 oder 2, wobei
wenn zwei oder mehr Speicherbereiche ein Überschreiben erfordern, die Entscheidungseinheit (105) so betreibbar ist, dass sie die Entscheidung durchführt, indem sie unter den geschätzten Batterieverbrauchen, die in der Speichereinheit (106) gespeichert sind, den Anteil der Restladung mit der Gesamtmenge der geschätzten Batterieverbrauche für das Überschreiben aller Speicherbereiche, die jeweils Teile von Daten, die das Überschreiben erfordern, speichern, vergleicht, und das Überschreiben nur dann durchführt, wenn alle Speicherbereiche, die Datenteile, welche das Überschreiben erfordern, speichern, mit der Restladung überschrieben werden können.

4. Speicherumschreibevorrichtung (1) nach Anspruch 1 oder 2, wobei,
wenn zwei oder mehr Speicherbereiche das Überschreiben erfordern, die Entscheidungseinheit (105) so betreibbar ist, dass sie die Menge der Restladung mit jedem Anteil an Batterieverbrauch zum Überschreiben von Daten in jedem Speicherbereich vergleicht und nur Bereiche überschreibt, die mit der Restladung überschrieben werden können.

5. Speicherumschreibevorrichtung (1) nach Anspruch 2, 3 oder 4, wobei
wenigstens ein Teil der in dem Speicher (202) gespeicherten Daten ein Boot-Programm ist.

6. Computerprogramm zum Durchführen eines Überschreibprozesses zum Überschreiben von Daten, die in einer Anzahl von Speicherbereichen (202A, 202B, 202C, 202D) eines Speichers in einem tragbaren Endgerät (20) gespeichert sind, auf einem Computer, wobei der Überschreibprozess aufweist:
einen Restladungsmengenerhaltschritt zum Erlangen einer Restladungsmenge in einer Batterie (204), die das tragbare Endgerät (20) treibt;
einen Halteschritt zum Halten der Aktualisierungsdateninformation, die für jeden Speicherbereich eine letzte Versionsnummer der in dem Speicherbereich zu speichernden Daten anzeigt;
einen Speicherschritt zum Speichern in einer Speichereinheit entsprechender geschätzter Batterieverbrauchsdaten des tragbaren Endgeräts zum Überschreiben von Teilen von Daten, die jeweils in der Anzahl von Speicherbereichen des Speichers in dem tragbaren Endgerät gespeichert sind;
einen Versionsnummernerhaltschritt zum Erlangen einer Versionsnummer der in dem Speicherbereich gespeicherten Daten für jeden Speicherbereich;
einen Bereichsspezifizierschritt, um für jeden Speicherbereich die letzte Versionsnummer, die von der Aktualisierungsdateninformation angegeben ist, und die Versionsnummer, die durch den Versionsnummernerhaltschritt erhalten worden ist, zu vergleichen und um einen oder mehrere Speicherbereiche zu spezifizieren, deren erhaltene Versionsnummer und letzte Versionsnummer nicht gleich sind; und
einen Entscheidungsschritt zum Entscheiden, ob der eine oder mehrere Speicherbereiche, die von dem Bereichsspezifizierschritt spezifiziert worden sind, zu überschreiben sind, basierend auf einem geschätzten Batterieverbrauch für den einen oder mehrere Speicherbereiche, der in der Speichereinheit gespeichert ist, und der Menge der Restladung in der Batterie, die durch den Restladungsmengenerhaltschritt erlangt worden ist.

7. Speicherumschreibeverfahren, das von einer Speicherumschreibevorrichtung (1) zum Überschreiben von Daten, die in einer Anzahl von Speicherbereichen (202a, 202B, 202C, 202D) eines Speichers in einem tragbaren Endgerät (20) gespeichert sind, verwendet wird, mit:
einem Restladungsmengenerhaltschritt zum Erlangen einer Menge der Restladung in einer Batterie (204), die das tragbare Endgerät (20) antreibt;
einem Halteschritt zum Halten der Aktualisierungsdateninformation, die für jeden Speicherbereich eine letzte Versionsnummer der Daten, die in dem Speicherbereich zu speichern sind, anzeigt;
einem Speicherschritt zum Speichern in einer Speichereinheit entsprechender, geschätzter Batterieverbrauchsdaten durch das tragbare Endgerät zum Überschreiben von Teilen von Daten, die jeweils in einer Anzahl von Speicherbereichen des Speichers in dem tragbaren Endgerät gespeichert sind;
einem Versionsnummernerhaltschritt zum Erlangen einer Versionsnummer von in den Speicherbereich gespeicherten Daten für jeden Speicherbereich; einem Bereichspezifizierschritt, um für jeden Speicherbereich die letzte Versionsnummer, die durch die Aktualisierungsdateninformation angegeben ist, und
die Versionsnummer, die durch den Versionsnummernerhaltschritt erlangt worden ist, zu vergleichen und um einen oder mehrere Speicherbereiche zu spezifizieren, deren erhaltene Versionsnummer und letzte Versionsnummer nicht gleich sind; und
einem Entscheidungsschritt zum Entscheiden, ob der eine oder mehrere Speicherbereiche, die durch den Bereichsspezifizierschritt spezifiziert worden sind, zu überschreiben sind auf der Basis von einem geschätzten Batterieverbrauch für den einen oder mehrere Speicherbereiche, die in der Speichereinheit gespeichert sind, und der Menge der Restladung in der Batterie, die durch den Restlandungsmengenerhaltschritt erlangt worden ist.

## Revendications

1. Dispositif de réécriture de mémoire (1) permettant de réécrire des données stockées dans une pluralité de zones de mémoire (202A, 202B, 202C, 202D) d'une mémoire dans un terminal portable (20), comprenant :
une unité d'obtention de quantité de charge résiduelle (104) permettant d'obtenir une quantité de charge résiduelle dans une batterie (204) qui alimente le terminal portable (20) ;
une unité de conservation permettant de conserver des informations de données d'actualisation indiquant, pour chaque zone de mémoire, un numéro de dernière version des données à stocker dans la zone de mémoire ;
une unité de stockage permettant de stocker des consommations de batterie estimées respectives par le terminal portable pour réécrire des blocs de données respectivement stockés dans la pluralité de zones de mémoire de la mémoire dans le terminal portable ;
une unité d'obtention de numéro de version permettant d'obtenir, pour chaque zone de mémoire, un numéro de version des données stockées dans la zone de mémoire ;
une unité de spécification de zones permettant de comparer, pour chaque zone de mémoire, le numéro de dernière version indiqué par les informations de données d'actualisation et le numéro de version obtenu par l'unité d'obtention de numéro de version, et de spécifier une ou plusieurs zones de mémoire dont le numéro de version obtenu et le numéro de dernière version ne sont pas identiques ; et
une unité d'évaluation (105) permettant d'évaluer s'il faut réécrire les une ou plusieurs zones de mémoire spécifiées par l'unité de spécification de zones sur la base d'une consommation de batterie estimée pour les une ou plusieurs zones de mémoire stockées dans l'unité de stockage et de la quantité de la charge résiduelle dans la batterie obtenue par l'unité d'obtention de quantité de charge résiduelle.

2. Dispositif de réécriture de mémoire (1) selon la revendication 1, dans lequel
quand la zone de mémoire peut être réécrite avec la charge résiduelle, l'unité d'évaluation (105) permet de déterminer qu'il faut réécrire la zone de mémoire et qu'il faut réécrire le bloc de données stocké dans la zone de mémoire.

3. Dispositif de réécriture de mémoire (1) selon la revendication 1 ou 2, dans lequel
quand deux ou plusieurs zones de mémoire nécessitent une réécriture, l'unité d'évaluation (105) permet d'effectuer l'évaluation en comparant la quantité de charge résiduelle à une quantité totale de consommations de batterie estimées, parmi les consommations de batterie estimées stockées dans l'unité de stockage (106), pour réécrire toutes les zones de mémoire qui stockent respectivement des blocs de données nécessitant une réécriture, et d'effectuer la réécriture uniquement quand toutes les zones de mémoire qui stockent les blocs de données nécessitant une réécriture peuvent être réécrites avec la charge résiduelle.

4. Dispositif de réécriture de mémoire (1) selon la revendication 1 ou 2, dans lequel
quand deux ou plusieurs zones de mémoire nécessitent une réécriture, l'unité d'évaluation (105) permet de comparer la quantité de charge résiduelle à chaque quantité de consommation de batterie pour réécrire des données dans chaque zone de mémoire, et de réécrire uniquement les zones qui peuvent être réécrites avec la charge résiduelle.

5. Dispositif de réécriture de mémoire (1) selon la revendication 2, 3 ou 4, dans lequel
au moins un des blocs de données stockés dans la mémoire (202) est un programme d'amorçage.

6. Programme informatique exécutable pour effectuer un processus de réécriture afin de réécrire des données stockées dans une pluralité de zones de mémoire (202A, 202B, 202C, 202D) d'une mémoire dans un terminal portable (20) lorsque ledit programme informatique est exécuté par un ordinateur, dans lequel le processus de réécriture comprend :
une étape d'obtention de quantité de charge résiduelle permettant d'obtenir une quantité de charge résiduelle dans une batterie (204) qui alimente le terminal portable (20) ;
une étape de conservation permettant de conserver des informations de données d'actualisation indiquant, pour chaque zone de mémoire, un numéro de dernière version des données à stocker dans la zone de mémoire ;
une étape de stockage permettant de stocker dans une unité de stockage des consommations de batterie estimées respectives par le terminal portable pour réécrire des blocs de données respectivement stockés dans la pluralité de zones de mémoire de la mémoire dans le terminal portable ;
une étape d'obtention de numéro de version permettant d'obtenir, pour chaque zone de mémoire, un numéro de version des données stockées dans la zone de mémoire ;
une étape de spécification de zones permettant de comparer, pour chaque zone de mémoire, le numéro de dernière version indiqué par les informations de données d'actualisation et le numéro de version obtenu par l'étape d'obtention de numéro de version, et de spécifier une ou plusieurs zones de mémoire dont le numéro de version obtenu et le numéro de dernière version ne sont pas identiques ; et
une étape d'évaluation permettant d'évaluer s'il faut réécrire les une ou plusieurs zones de mémoire spécifiées par l'étape de spécification de zones sur la base d'une consommation de batterie estimée pour les une ou plusieurs zones de mémoire stockées dans l'unité de stockage et de la quantité de la charge résiduelle dans la batterie obtenue par l'étape d'obtention de quantité de charge résiduelle.

7. Procédé de réécriture de mémoire utilisé par un dispositif de réécriture de mémoire (1) afin de réécrire des données stockées dans une pluralité de zones de mémoire (202A, 202B, 202C, 202D) d'une mémoire dans un terminal portable (20), comprenant :
une étape d'obtention de quantité de charge résiduelle permettant d'obtenir une quantité de charge résiduelle dans une batterie (204) qui alimente le terminal portable (20) ;
une étape de conservation permettant de conserver des informations de données d'actualisation indiquant, pour chaque zone de mémoire, un numéro de dernière version des données à stocker dans la zone de mémoire ;
une étape de stockage permettant de stocker dans une unité de stockage des consommations de batterie estimées respectives par le terminal portable pour réécrire des blocs de données respectivement stockés dans la pluralité de zones de mémoire de la mémoire dans le terminal portable ;
une étape d'obtention de numéro de version permettant d'obtenir, pour chaque zone de mémoire, un numéro de version des données stockées dans la zone de mémoire ;
une étape de spécification de zones permettant de comparer, pour chaque zone de mémoire, le numéro de dernière version indiqué par les informations de données d'actualisation et le numéro de version obtenu par l'étape d'obtention de numéro de version, et de spécifier une ou plusieurs zones de mémoire dont le numéro de version obtenu et le numéro de dernière version ne sont pas identiques ; et
une étape d'évaluation permettant d'évaluer s'il faut réécrire les une ou plusieurs zones de mémoire spécifiées par l'étape de spécification de zones sur la base d'une consommation de batterie estimée pour les une ou plusieurs zones de mémoire stockées dans l'unité de stockage et de la quantité de la charge résiduelle dans la batterie obtenue par l'étape d'obtention de quantité de charge résiduelle.
